# EUROPEAN PATENT APPLICATION

(11) **EP 4 507 087 A1**
(43) Date of publication of application: **12.02.2025**
(21) Application number: 23907749.8
(22) Date of filing: 20.12.2023
(51) Int. Cl.: H01M 50/204, H01M 50/502, H01M 10/42, H01M 10/653, H01R 13/52, H01M 10/6567, H01M 10/613, H01M 50/553, H01M 50/567, H01M 50/562

(54) **BATTERY PACK AND DEVICE COMPRISING SAME**

(30) Priority: 22.12.2022 KR 20220181906; 10.03.2023 KR 20230031738; 19.12.2023 KR 20230185439
(71) Applicant: LG Energy Solution, Ltd., Seoul 07335 (KR)
(72) Inventor: HWANG, Taewon, Daejeon 34122 (KR); YUN, Hyeonki, Daejeon 34122 (KR); JU, Eunah, Daejeon 34122 (KR); TANNENBERGER, Günter, 85123 Pobenhausen (DE); HARASZTOSI, Uwe, 74172 Neckarsulm (DE); WASSERMANN, Thomas, 74321 Bietigheim-Bissingen (DE)
(74) Representative: Plasseraud IP
(86) International application number: PCT/KR2023/021142
(87) International publication number: WO 2024/136466

(57) **Abstract**

A battery pack according to one embodiment of the present disclosure includes: battery modules that include a battery cell stack containing a plurality of battery cells, and a module frame that houses the battery cell stack and has an opening part formed on one side; and a plurality of HV connection assemblies that electrically connect battery modules adjacent thereto, wherein the battery module includes a terminal busbar connected to at least one of the electrode leads of the battery cells, wherein the HV connection assemblies and the terminal busbars included in the adjacent battery modules are respectively connected through the opening part, and wherein sealing is applied between the HV connection assembly and the opening part.

## Description

### [TECHNICAL FIELD]

### Cross Citation with Related Application(s)

This application claims priority benefit of Korean Patent Application No. 10-2022-0181906 filed on December 22, 2022, Korean Patent Application No. 10-2023-0031738 filed on March 10, 2023 and Korean Patent Application No. 10-2023-0185439 filed on December 19, 2023 in the Korean Intellectual Property Office, the disclosures of which are incorporated herein by reference in their entirety.

The present disclosure relates to a battery pack and a device including the same, and more particularly, to a battery pack having improved sealing performance and space efficiency while improving cooling performance, and a device including the same.

### [BACKGROUND]

As the technology development of and the demand for mobile devices have increased, the demand for secondary batteries as energy sources has rapidly increased. A variety of researches on batteries capable of meeting various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel.

Meanwhile, when a plurality of battery cells are connected in series or in parallel to configure a battery pack, it is common to configure a battery module composed of at least one battery cell first and then configure a battery pack by using at least one battery module and adding other components.

Since battery cells constituting such a medium- or large-sized battery module are composed of secondary batteries which can be charged and discharged, such a high-output large-capacity secondary battery generates a large amount of heat in a charge and discharge process. In this case, heat generated from multiple battery cells can be added up in a narrow space, so that the temperature can rise more quickly and excessively. In other words, battery modules in which multiple battery cells are stacked and a battery pack equipped with these battery modules can obtain high output, but it is not easy to remove heat generated from the battery cells during charge and discharge. When the heat dissipation of battery cells is not properly performed, deterioration of the battery cells is accelerated, the life is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since multiple battery modules are concentratedly arranged to increase the mileage of the vehicle, a flame or heat generated in any one of the battery modules can easily propagate to an adjacent battery module, which may eventually lead to ignition or explosion of the battery pack itself.

Further, since the battery pack is constructed by combining multiple battery modules, it is heavy and unsuitable for loading multiple batteries into a moving means such as an automobile, and thus, it is necessary to improve energy density.

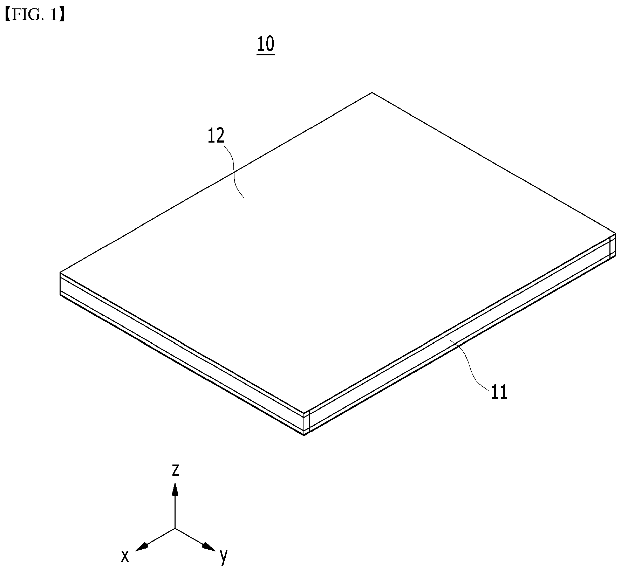

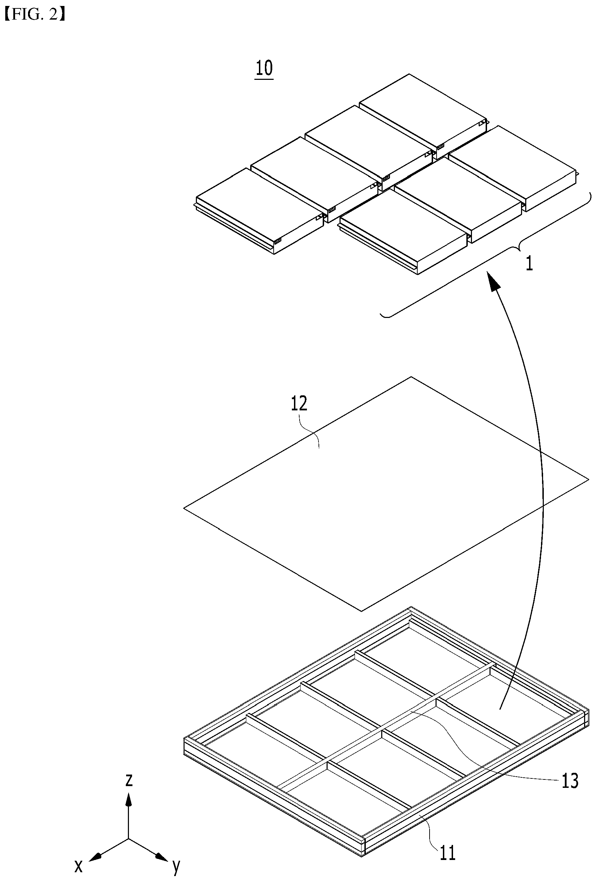

FIG. 1 is a diagram showing a conventional battery pack. FIG. 2 is an exploded perspective view of the battery pack of FIG. 1.

Referring to FIGS. 1 and 2, a conventional battery pack 10 includes a lower pack frame 11 on which a plurality of battery modules 1 are mounted, an upper pack frame 12 located on an upper part of the battery module 1, and an internal beam 13 that partitions the position where the battery module 1 is mounted within the battery pack 10.

When the battery module 1 is mounted within the battery pack 10 in this way, since the energy density of the battery pack 10 may be reduced due to the internal beams 13 that partition between the battery modules 1. Therefore, there is a problem that a greater number of battery packs 10 must be provided in order to satisfy the efficiency required for devices, and the like. Furthermore, due to the weight of the battery packs 10, there is a limit to the number of battery packs 10 that can be provided in a device. Therefore, in order to reduce the weight of the battery pack 10 and at the same time increase the energy density of the battery pack 10, there is a need to mount a greater number of battery modules 1 within the battery pack 10.

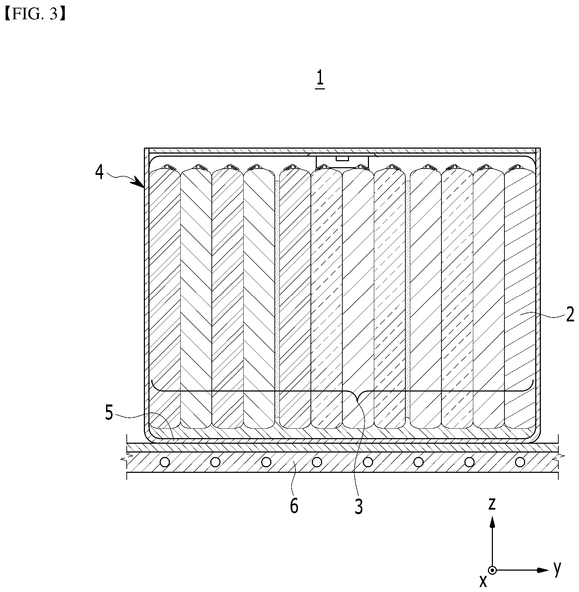

FIG. 3 is a cross-sectional view showing a cross section of one of the battery modules included in the battery pack of FIG. 2.

Referring to FIG. 3, a conventional battery module 1 includes a battery cell stack 3 including battery cells 2 stacked in a preset direction, and a module frame 4 that houses the battery cell stack 3, wherein the battery cell stack 3 is fixedly located on a thermally conductive resin layer 5 located on a lower surface of the module frame 4. In this case, a heat sink 6 located under the bottom part of the module frame 4 may be provided to cool the heat generated from the battery cell stack 3.

However, since the heat sink 6 does not receive transfer of heat while being in direct contact with the battery cell stack 3, it has the disadvantage that its cooling efficiency is not very high. In particular, an air gap may be formed between the bottom part of the module frame 4 and the thermally conductive resin layer 5, which is a factor that hinders heat transfer. There is a need develop a method for more effectively cooling the battery module 1.

Moreover, in a conventional battery pack, the HV cable is connected to respective modules and battery management system without a separate sealing member. In this respect, the conventional HV cable connection method has a problem that sealing performance is not ensured. In addition, when applying a cooling method for improving the cooling performance of the battery pack, conventional HV cable connection methods need to further ensure sealing performance, however, this has the problem of adding multiple components, thus reducing space efficiency and increasing manufacturing costs.

Putting the above together, there is a need to develop a battery pack having improved sealing performance and space efficiency while improving cooling performance, and a device including the same.

### [DETAILED DESCRIPTION OF THE INVENTION]

### [Technical Problem]

It is an object of the present disclosure to provide a battery pack having improved sealing performance and space efficiency while improving cooling performance, and a device including the same.

The objects of the present disclosure are not limited to the aforementioned objects, and other objects which are not mentioned herein should be clearly understood by those skilled in the art from the following detailed description and the accompanying drawing.

### [Technical Solution]

According to one embodiment of the present disclosure, there is provided a battery pack comprising: battery modules that include a battery cell stack containing a plurality of battery cells, and a module frame that houses the battery cell stack and has an opening part formed on one side; and a plurality of HV connection assemblies that electrically connect battery modules adjacent thereto, wherein the battery module includes a terminal busbar connected to at least one of the electrode leads of the battery cells, wherein the HV connection assembliles and the terminal busbars included in the adjacent battery modules are respectively connected through the opening part, and wherein sealing is applied between the HV connection assembly and the opening part.

The battery pack further comprises a BDU (battery disconnect unit) module that controls electrical connection between the battery modules, wherein the HV connection assembly may connect the BDU module and the terminal busbar of the battery module adjacent to the BDU module, respectively.

The HV connection assembly may comprises a HV cable for electrical connection, a bracket disposed in the opening part, and a connection member that passes through the bracket and connects the terminal busbar and the HV cable.

The battery pack further comprises a fixing member that fixes adjacent HV connection assemblies to each other, wherein the fixing member may be coupled to the HV cable included in the HV connection assembly.

The HV connection assembly may further comprise a first sealing member located between the bracket and one surface of the module frame.

The HV connection assembly further comprises an HV connector housing coupled to the bracket, and the connection member and the HV cable may be connected in the internal space formed by coupling the bracket and the HV connector housing.

The connection member may comprise a busbar bolting member fastened to the terminal busbar through a bolt coupling, an adapter disposed on an upper part of the busbar bolting member, and a pin member that connects the HV cable with the adapter and the busbar bolting member.

The upper part of the HV connector housing is opened, and the pin member is inserted into the upper part of the HV connector housing, and the HV connection assembly may further comprise an upper cap that covers the upper part of the HV connector housing.

The HV connection assembly may further comprise a second sealing member that is located at a connection portion between the bracket and the HV connector housing.

The HV connection assembly may further comprise a third sealing member that is located between the HV cable and the HV connector housing.

The opening part may be formed on the upper surface of the module frame.

The terminal busbars included in the adjacent battery modules connected to the HV connection assembly may have different polarities from each other.

The battery module may be configured to allow an insulating cooling liquid to flow in the space inside the module frame and directly cool the plurality of battery cells.

The battery pack comprises a busbar frame that is located respectively on the front and rear surface of the battery cell stack, the busbar frame is formed with at least one slit through which the insulating cooling liquid flows, and the insulating cooling liquid may flow into and out of the space inside the module frame through the at least one slit.

According to another embodiment of the present disclosure, there is provided a device comprising the above-mentioned battery pack.

### [Advantageous Effects]

According to embodiments of the present disclosure, the battery cells can be directly cooled with a coolant, thereby improving the cooling efficiency of the battery pack and the device including the same.

The HV connection assemblies and the terminal busbars included in the battery modules adjacent to each other are connected respectively through the opening part, and sealing is applied between the HV connection assembly and the opening part, thereby capable of improving the sealing performance and space efficiency of the HV connection structure.

Effects obtainable from the present disclosure are not limited to the effects mentioned above, and additional other effects not mentioned herein will be clearly understood from the description and the appended drawings by those skilled in the art.

### [BRIEF DESCRIPTION OF THE DRAWINGS]

FIG. 1 is a diagram showing a conventional battery pack;
FIG. 2 is an exploded perspective view of the battery pack of FIG. 1;
FIG. 3 is a cross-sectional view showing a cross section of one of the battery modules included in the battery pack of FIG. 2;
FIG. 4 is a perspective view showing a battery pack according to an embodiment of the present disclosure;
FIG. 5 is a perspective view showing the battery module and HV connection assembly included in the battery pack of FIG. 4;
FIG. 6 is a diagram showing a battery cell stack included in the battery module of FIG. 5;
FIGS. 7 and 8 are diagrams showing the battery cell stack of FIG. 6 and a busbar frame coupled to the front and rear surfaces of the battery cell stack;
FIG. 9 is a diagram which enlarges and shows a part of FIG.8;
FIG. 10 is a diagram showing a state in which the battery cell stack of FIG. 6 is inserted into the front and rear surfaces of the module frame in the battery module of FIG. 5;
FIGS. 11 to 14 are diagrams showing the HV connection assembly coupled to the battery module of FIG. 5; and
FIG. 15 is a cross-sectional view in the state where the HV connection assembly is coupled to the battery module of FIG. 5.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Now, a battery pack according to one embodiment of the present disclosure will be described.

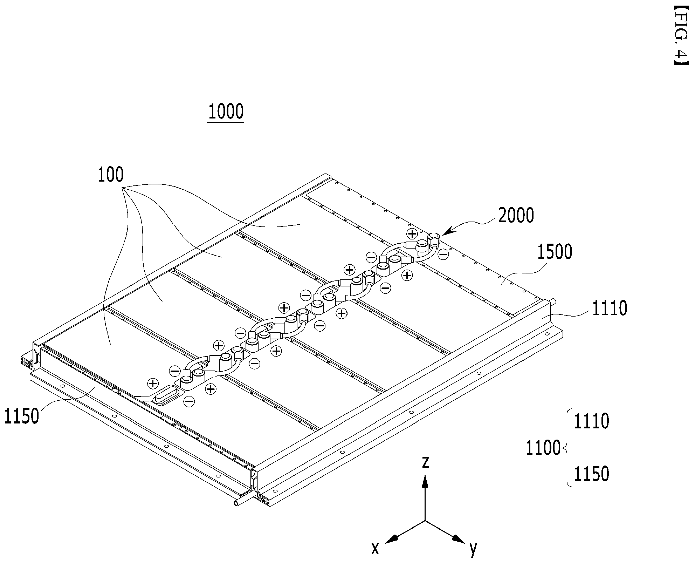

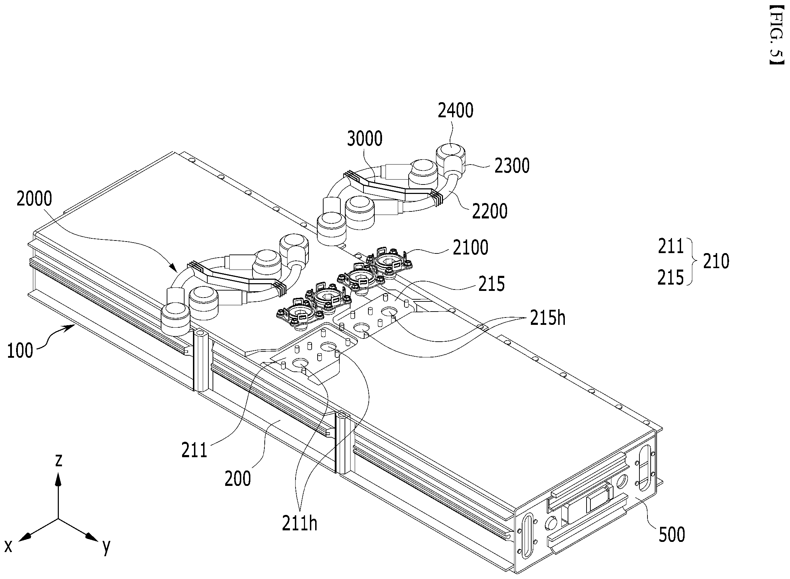

FIG. 4 is a perspective view showing a battery pack according to an embodiment of the present disclosure. FIG. 5 is a perspective view showing the battery module and HV connection assembly included in the battery pack of FIG. 4.

Referring to FIG. 4, the battery pack 1000 according to an embodiment of the present disclosure comprises a plurality of battery modules 100, a side surface frame 1100 that houses the plurality of battery modules 100, and an electrical section 1500 to which electrical components are mounted.

Further, the plurality of battery modules 100 may form a battery module assembly that is aligned and arranged in one direction. As one example, the plurality of battery modules 100 may be aligned and arranged in the width direction (x-direction) of the battery module 100. However, the arrangement direction of the plurality of battery modules 100 is not limited thereto, and can be arranged in various other directions.

Referring to FIG. 4, the side surface frame 1100 may comprise a first side surface frame 1110 and a second side surface frame 1150. Here, the first side surface frame 1110 may extend along the width direction of each battery module 100 of the plurality of battery modules 100. Further, the second side surface frame 1150 may extend along the longitudinal direction of the battery module 100.

Further, in a state where a plurality of battery modules 100 are arranged in one direction, the second side surface frame 1150 is coupled to both side surfaces of a battery module assembly in which a plurality of battery modules 100 are arranged in one direction, and then the first side surface frame 1110 may be coupled to front and rear surfaces of the battery module assembly. However, the present disclosure is not limited thereto, and on the contrary, the first side surface frame 1110 is coupled to the front and rear surfaces of the battery module assembly, and then the second side surface frame 1150 may be coupled to both side surfaces of the battery module assembly.

The first side surface frame 1110 and the second side surface frame 1150 have fixing means located at the portions where they come into contact with each other, so that the first side surface frame 1110 and the second side surface frame 1150 may be coupled to each other. As one example, the first side surface frame 1110 and the second side surface frame 1150 are respectively provided with fixing means such as bolts and nuts, so that the first side surface frame 1110 and the second side surface frame 1150 may be coupled to each other. However, the present disclosure is not limited thereto, and the portions of the first side surface frame 1110 and the second side surface frame 1150 that come into contact with each other may be fixed to each other by a separate fastening method such as welding or adhesion.

Here, the side surface frame 1100 may be made of a heat-insulating member. As one example, the side surface frame 1100 may be composed of an aluminum extrusion structure. As another example, the side surface frame 1100 may be made of a dissimilar metal bonding material such as clad metal, or may be a structure containing a heat-insulating material such as aerogel or EPP (Expanded Polypropylene) foam. However, the present disclosure is not limited thereto, and the side surface frame 1100 can be used without limitation as long as it is made a heat-insulating material having a prescribed rigidity.

Accordingly, the battery pack 1000 according to the present embodiment is configured such that a side surface frame 1100 is coupled to both side surfaces and the front and rear surfaces of a battery module assembly in which a plurality of battery modules 100 are aligned and arranged in one direction, so that the stability of the battery module 100 can be secured from the external environment. Further, the battery pack 1000 according to the present embodiment is configured to eliminate separate frame members that can be located on the upper and lower surfaces of the battery module assembly, and thus has the advantage that a pack-less structure can be realized and energy density and space efficiency can be increased.

Referring to FIG. 4, in the battery pack 1000 according to the present embodiment, the electrical section 1500 includes a BDU(battery disconnect unit) module that controls electrical connection between other electrical components and the battery modules 100.

The BDU module is a member for controlling electrical connection of the battery module 100, and can cut off power between the power conversion device and the battery module 100. The BDU module can cut off power of the battery pack 1000 when a condition occurs where the current exceeds the set range, thereby ensuring the safety of the battery pack 1000.

Further, the BDU module may be electrically connected to the plurality of battery modules 100 through a high voltage (HV) connection assembly 2000. That is, the HV connection assembly 2000 may be in charge of HV (high voltage) connection. Here, the HV connection is a connection that serves as a power source to supply power, which refers to a connection between battery cells or a connection between battery modules.

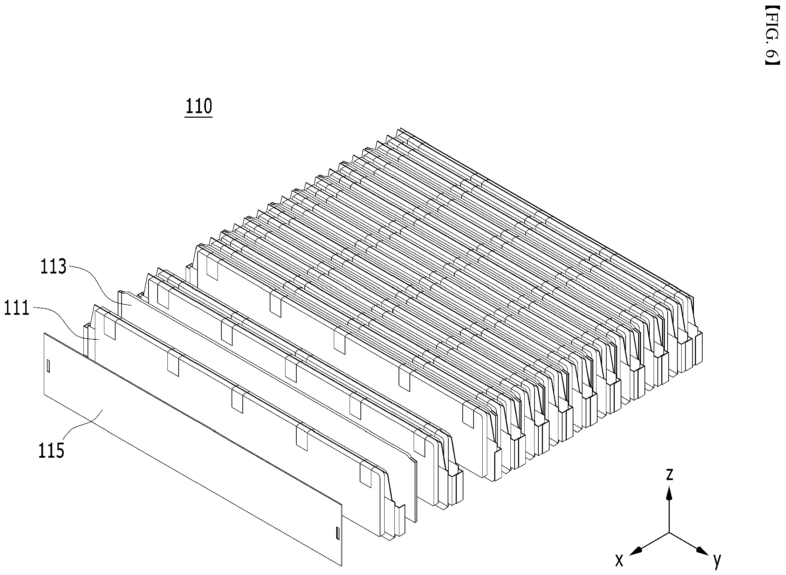

Referring to FIGS. 4 and 5, the battery pack 1000 according to an embodiment of the present disclosure comprises battery modules 100 that include a battery cell stack (110, FIG. 6) containing a plurality of battery cells (111, FIG. 6) and a module frame 200 that houses a battery cell stack 110 (FIG. 6), and has an opening part 210 formed on one side; and a plurality of HV connection assemblies 2000 that electrically connect battery modules 100 adjacent thereto.

The module frame 200 may be a metal plate-shaped mono frame in which the upper and lower surfaces and both side surfaces are integrated. As another example, the module frame 200 may include a metal plate-shaped lower frame whose upper surface and both side surfaces are integrated, and an upper cover that covers the upper surface of the lower frame. As another example, the module frame 200 may be a frame in a form in which two L-shaped frames are coupled. As another example, the module frame 200 may be a frame of a 4-plate structure in which an upper surface plate, a lower surface plate, a left plate, and a right plate are coupled. However, the present disclosure is not limited thereto, and any frame can be applied to the present embodiment as long as it can protect the internal components of the battery module 100.

Here, respective components of the module frame 200 may be joined by welding or the like in a state in which corresponding edge portions are in contact with each other, or may be fixed to each other through separate fastening members. Further, each component of the module frame 200 may be composed of a metal material having a predetermined strength.

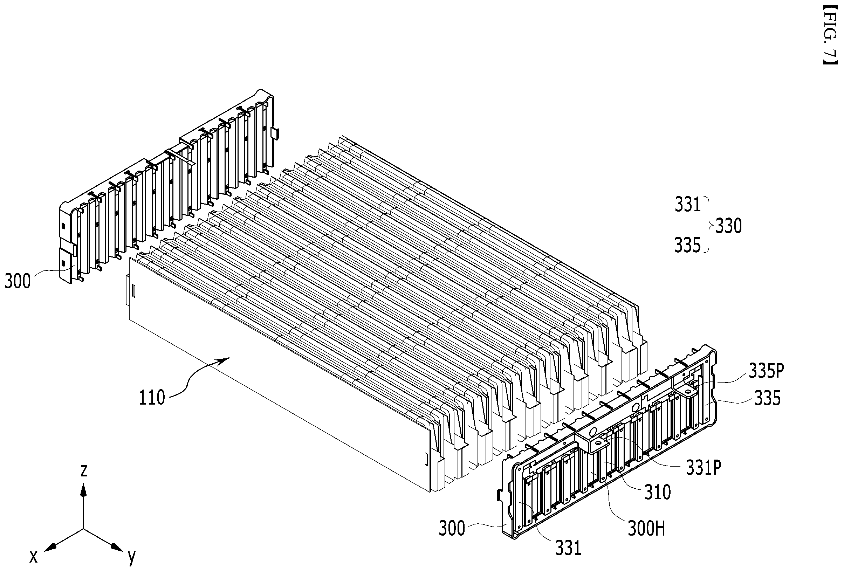

Referring to FIG. 5, the module frame 200 may include an opening part 210, wherein the opening part 210 may be formed on the upper surface of the module frame 200. As one example, the opening part 210 includes a first opening part 211 and a second opening part 215, wherein the first opening part 211 and the second opening part 215 may be arranged to be spaced apart from each other along the width direction of the battery module 100. However, the number and position of the opening part 210 are not limited thereto, and may vary depending on the number and position of the terminal busbars 330 (FIG. 7) that require electrical connection with the HV connection assembly 2000.

More specifically, the opening part 210 may include open holes 211h and 215h that passes through the upper surface of the module frame 200. As one example, the first opening part 211 includes a pair of first open holes 211h, and the second opening part 215 may include a pair of second open holes 215h. Here, the pair of first open holes 211h and the pair of second open holes 215h may be arranged to be spaced apart from each other along the width direction of the battery module 100. However, the number and position of the open holes 211h and 215h are not limited thereto, and may vary depending on the number and position of the terminal busbars 330 (FIG. 7) that require electrical connection with the HV connection assembly 2000.

Referring to FIGS. 4 and 5, in the battery pack 1000 according to the present embodiment, the HV connection assembly 2000 and the terminal busbars 330 (FIG. 7) included in the battery modules 100 adjacent to each other can be connected through the opening part 210. Further, the HV connection assembly 2000 may be connected to the BDU module included in the electrical section 1500 and a terminal busbar 330 (FIG. 7) of the battery module 100 adjacent to the BDU module, respectively.

Here, the terminal busbars 330 (FIG. 7) included in the adjacent battery modules 100 connected with the HV connection assembly 2000 may have different polarities from each other. As one example, as shown in FIG. 4, the HV connection assembly 2000 can electrically connect a terminal busbar 330 (FIG. 7) having a positive electrode in one battery module 100 among the battery modules 100 adjacent to each other and a terminal busbar (330, FIG. 7) having a negative electrode in another battery module 100.

Further, the BDU module connected with the HV connection assembly 2000 and the terminal busbars 330 (FIG. 7) included in the adjacent battery modules 100 can have different polarities from each other. As one example, as shown in FIG. 4, the HV connection assembly 2000 can electrically connect the positive electrode part in the BDU module and the terminal busbar 330 (FIG. 7) having the negative electrode in the adjacent battery modules 100. Further, in the opposite case, the HV connection assembly 2000 can electrically connect the negative electrode part in the BDU module and the terminal busbar 330 (FIG. 7) having the positive electrode in the adjacent battery modules 100.

Thereby, in the battery pack 1000 according to the present embodiment, the terminal busbar 330 (FIG. 7) and the BDU module can be electrically connected to the HV connection assembly 2000 through the opening part 210 of the battery module 100, thereby ensuring a margin for assembly tolerance while relatively simplifying the HV coupling method.

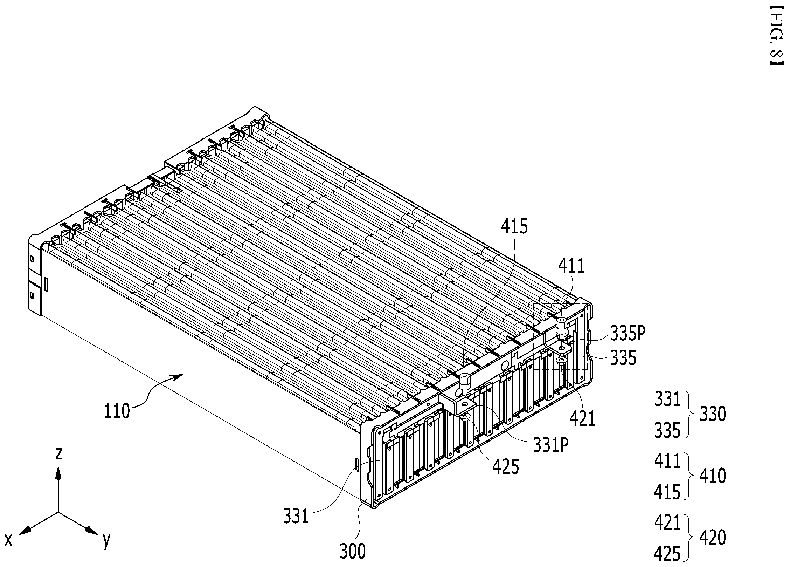

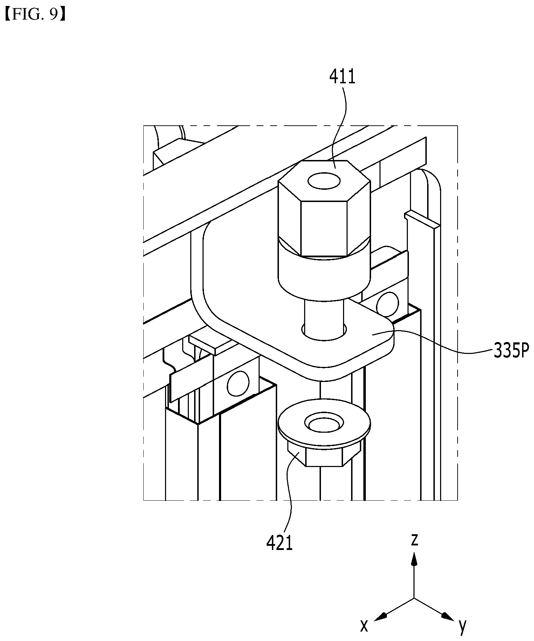

FIG. 6 is a diagram showing a battery cell stack included in the battery module of FIG. 5. FIGS. 7 and 8 are diagrams showing the battery cell stack of FIG. 6 and a busbar frame coupled to the front and rear surfaces of the battery cell stack. FIG. 9 is a diagram which enlarges and shows a part of FIG.8.

In the battery module 100 according to the present embodiment, the insulating cooling liquid flows in the space within the module frame 200 and can directly cool the battery cells 111. More specifically, referring to FIGS. 5 and 8, the battery module 100 can house the battery cell stack 110 within the module frame 200.

Here, referring to FIG. 6, the battery cell stack 110 may include a plurality of battery cells 111 and at least one flow path spacer 113 interposed between adjacent battery cells 111. Further, the battery cell stack 110 may include an insulating plate 115 interposed on both sides of the battery cell stack 110. In addition, although not shown in FIG. 6, the battery cell stack 110 may further include a buffer pad interposed between adjacent battery cells 111. That is, the battery cell stack 110 may be formed by stacking the battery cell 111, the flow path spacer 113, and the insulating plate 115 in a vertically erected manner on the ground (a surface aligned with the X-Y plane).

As one example, the battery cell 111 is preferably a pouch type battery cell. As one example, the battery cell 111 may be produced by housing the electrode assembly in a pouch case of a laminate sheet including a resin layer and an inner layer, and then heat-sealing a sealing part of the pouch case. Such a battery cell 111 may be formed in a rectangular sheet-like structure. The battery cells 111 may be configured by a plurality of numbers, and the plurality of battery cells 111 are stacked so as to be electrically connected to each other, thereby forming a battery cell stack 110. Herein, the number of battery cells 111 constituting the battery cell stack 110 may be adjusted according to circumstances.

Further, the flow path spacer 113 is provided with a cooling liquid flow path interposed between adjacent battery cells 111, so that at least a portion of the insulated cooling liquid flowing into the module frame 200 can come into direct contact with the battery cells 111. Here, the cooling liquid flow path may be provided in a plurality of numbers, and may extend along the longitudinal direction of the flow path spacer 113.

However, the battery module 100 according to another embodiment of the present invention may eliminate the flow path spacer 113, and the insulating cooling liquid flowing into the module frame 200 may flow through the space between the upper and lower parts of the battery cell stack 110 and the module frame 200.

Thereby, the battery module 100 according to the present embodiment has the advantage that the battery cell 111can be directly cooled with the insulating cooling liquid, which can further improve the cooling efficiency of the battery module 100.

Referring to FIGS. 5 to 8, the battery module 100 according to the present embodiment may further comprise a busbar frame 300 located respectively on the front and rear surfaces of the battery cell stack 110. Here, the busbars 310 and 330 electrically connected to electrode leads of the battery cells 111 included in the battery cell stack 110 may be located on the busbar frame 300.

Further, the battery module 100 may further include an end plate 500 that covers the busbar frame 300. Thereby, the end plate 500 can physically protect the battery cell stack 110 and other electrical components from external impact.

Referring to FIGS. 7 and 8 , the busbars 310 and 350 may include a plurality of busbars 310 and a pair of terminal busbars 330. Here, the plurality of busbars 310 are fixed on the busbar frame 300 and can be coupled to the electrode leads of the battery cells 111 pulled out through electrode lead slits formed in the busbar frame 300, so that a plurality of battery cells 111 can be electrically connected to each other.

The pair of terminal busbars 330 includes a first terminal busbar 331 and a second terminal busbar 335. Here, the pair of terminal busbars 330 may be fixed on the busbar frame 300 and can be coupled to the electrode leads of the battery cell 111 located at the outermost position among the plurality of battery cells 111. That is, the pair of terminal busbars 330 function as high potential terminals and can be electrically connected to the HV connection assembly 2000. As one example, the first terminal busbar 331 and the second terminal busbar 335 may have different polarities (positive electrode or negative electrode) from each other.

Referring to FIGS. 5, 7 and 8, one end of the terminal busbar 330 includes a protrusion, wherein the protrusion may protrude from the busbar frame 300 in a direction toward the end plate 500. As one example, the first terminal busbar 331 includes a first terminal busbar protrusion 331P that protrudes from the busbar frame 300 in a direction toward the end plate 500, and the second terminal busbar 335 may include a second terminal busbar protrusion 335P that protrudes from the busbar frame 300 in a direction toward the end plate 500.

Further, the protrusion formed on the terminal busbar 330 may be fastened to the bolting members 410 and 420 by a bolt coupling. Here, the bolting members 410 and 420 include busbar bolts 411 and 415 and busbar nuts 421 and 425, as shown in FIG. 8.

More specifically, referring to FIGS. 8 and 9, a hole is formed passing through the center of the first terminal busbar protrusion 331P, and the first busbar bolt 415 and the first busbar nut 425 may be fastened to the upper and lower parts of the hole through a bolt coupling. In addition, a hole is formed passing through the center of the second terminal busbar protrusion 335P, and the second busbar bolt 411 and the second busbar nut 421 may be fastened to the upper and lower portions of the hole through a bolt coupling.

However, the present disclosure is not limited thereto, and unlike FIGS. 8 and 9, a case where the positions of the busbar bolts 411 and 415 and the busbar nuts 421 and 425 are changed so that the bolt coupling is fastened may also be included in the present embodiment.

Further, the busbar frame 300 may be formed with at least one slit 300H through which the insulating cooling liquid flows. That is, in the busbar frame 300, the insulating cooling liquid may flow into and out of the space inside the module frame through at least one slit 300H. In other words, at least one slit 300H may function as a passage that allows an insulating cooling liquid having flowed in from the outside to flow toward the battery cell stack 110. On the contrary, at least one slit 300H may function as a passage that allows the insulating cooling liquid having flowed into the inside of the module frame 200 to be discharged to the outside.

As one example, at least one slit 300H may be formed at a position that corresponds to the flow path spacer 113. Further, at least one slit 300H may have a size that corresponds to that of the flow path spacer 113.

As another example, in the battery module 100 according to another embodiment of the present invention, when the flow path spacer 113 is eliminated unlike FIG. 6, at least one slit 300H may be formed at a position that corresponds to the space between the upper and lower portions of the battery cell stack 110 and the module frame 200.

Thereby, the battery module 100 according to the present embodiment has the advantage that the insulating cooling liquid for the battery cell 111 can easily flow into and out of the module frame 200, so that the cooling efficiency of the battery module 100 can be further improved.

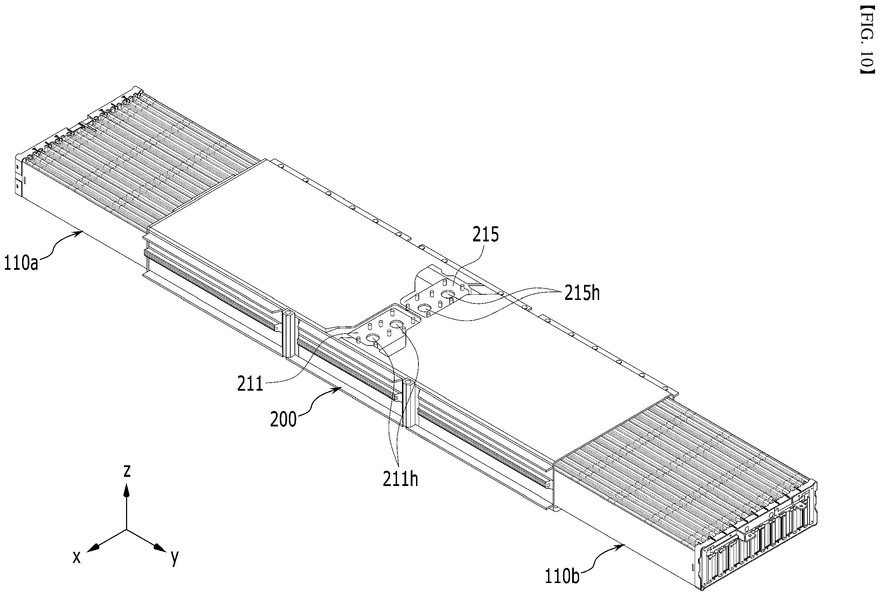

FIG. 10 is a diagram showing a state in which the battery cell stack of FIG. 6 is inserted into the front and rear surfaces of the module frame in the battery module of FIG. 5.

Referring to FIGS. 5, 6 and 10, the battery module 100 according to the present embodiment may include a pair of battery cell stacks 110a and 110b that are aligned along the longitudinal direction of the battery module 100. At this time, the module frame 200 can house a pair of battery cell stacks 110a and 110b.

Referring to FIG. 10, the front surface of the first battery cell stack 110a and the rear surface of the second battery cell stack 110b may face each other. Further, although not shown in FIG. 10, the terminal busbar located on the front surface of the first battery cell stack 110a and the terminal busbar located on the rear surface of the second battery cell stack 110b can be electrically connected to the HV connection assembly 2000 through the opening part 210 in the module frame 200. More specifically, the bolting member fastened to the terminal busbar located on the front surface of the first battery cell stack 110a and the bolting member fastened to the terminal busbar located on the rear surface of the second battery cell stack 110b can be electrically connected to the HV connection assembly 2000 through the opening part 210 of the module frame 200.

However, the present disclosure is not limited thereto, and the battery module 100 according to another embodiment may include one battery cell stack 110, or may include a plurality (two or more) of battery cell stacks 110.

Thereby, the battery pack 1000 according to the present embodiment includes a plurality of battery cell stacks to increase energy density, and also the terminal busbar 330 (FIG. 7) of each battery cell stack 110 and the BDU module can be electrically connected to the HV connection assembly 2000 through the opening part 210 of the battery module 100, thereby ensuring a margin for assembly tolerance while relatively simplifying the HV coupling method.

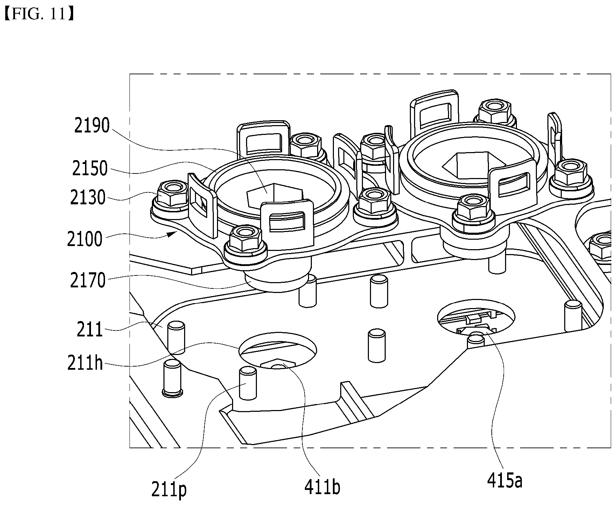

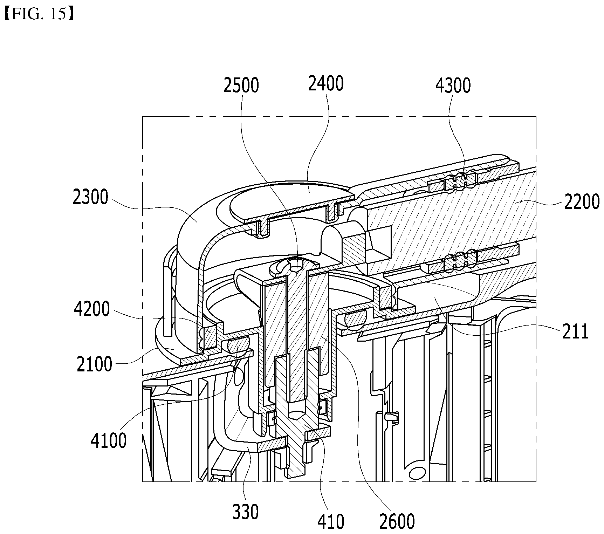

FIGS. 11 to 14 are diagrams showing the HV connection assembly coupled to the battery module of FIG. 5. FIG. 15 is a cross-sectional view in the state where the HV connection assembly is coupled to the battery module of FIG. 5.

Referring to FIGS. 5 and 7, the HV connection assembly 2000 may include a HV cable 2200 for electrical connection, a bracket 2100 disposed in the opening part 210, and a connection member that passes through the bracket 2100 and connects the terminal busbar 330 and the HV cable 2200.

More specifically, referring to FIGS. 5 and 11, in the HV connection assembly 2000, the bracket 2100 may be placed and coupled to the opening part 210 of the module frame 200. As one example, as shown in FIG. 11, the bracket 2100 may be placed and coupled in the first opening part 211. In the following, the first opening part 211 will be mainly described, but the contents to be described below regarding the second opening part 215 may also be similarly explained.

As one example, the bracket 2100 may include a fixing part 2130, a main body 2150, an extension part 2170, and a connection hole 2190. Here, the fixing part 2130 may be fixed to the first protrusion 211p formed in the first opening part 211 through a fitting coupling or a bolt coupling. The extension part 2170 is a part extending from the main body 2150 toward the module frame 200, and the extension part 2170 may be inserted into the first open hole 211h formed in the first opening part 211.

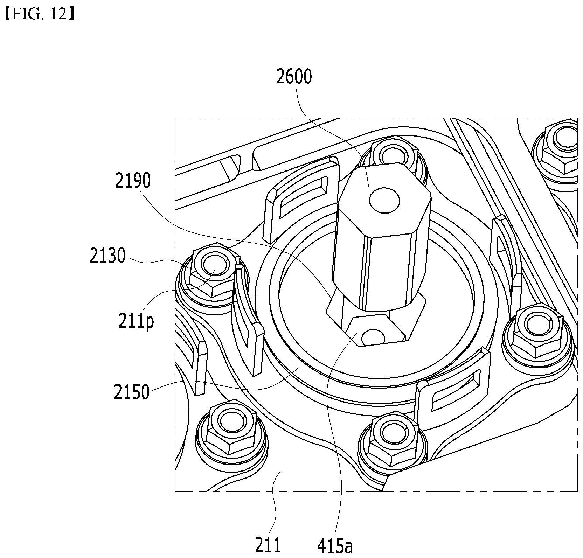

Referring to FIGS. 11 and 12, in a state in which the bracket 2100 is coupled to the module frame 200, the adapter 2600 may be inserted into the connection hole 2190 of the bracket 2100. Here, the adapter 2600 may be electrically connected to the terminal busbar 330 (FIG. 7) of the battery cell stack 110 housed inside the module frame 200. More specifically, the upper part of the busbar bolting members 410 and 420 fastened to the terminal busbar 330 (FIG. 7) by a bolt coupling may be exposed to the outside through the first open hole 211h and the connection hole 2190 of the bracket 2100. Here, the adapter 2600 may be disposed on an upper part of the busbar bolting members 410 and 420 and electrically connected to the adapter 2600 and the busbar bolting members 410 and 420.

As one example, referring to FIGS. 10 to 12, the first battery cell stack 110a and the second battery cell stack 110b face each other. Although not shown in detail in FIG. 10, busbar bolts 411a and 415a fastened to the terminal busbar of the first battery cell stack 110a and busbar bolts 411b and 415b fastened to the terminal busbar of the second battery cell stack 110b may be located crossing each other. At this time, as shown in FIG. 11, the first busbar bolt 415a of the first battery cell stack 110a and the second busbar bolt 411b of the second battery cell stack 110b may be located to correspond to the pair of open holes 211h included in the first opening part 211, respectively. However, the present disclosure is not limited thereto, and the above-mentioned position can vary depending on the position of the terminal busbar of each battery cell stack.

Here, as shown in FIG. 12, the adapter 2600 is disposed on the upper part of the first busbar bolt 415a of the first battery cell stack 110a, and the adapter 2600 may be electrically connected to the first busbar bolt 415a of the first battery cell stack 110a. Further, although not shown in FIG. 12, the adapter 2600 can also be arranged on the upper part of the second busbar bolt 411b of the second battery cell stack 110b, so that the adapter 2600 can be electrically connected to the second busbar bolt 411b of the second battery cell stack 110b.

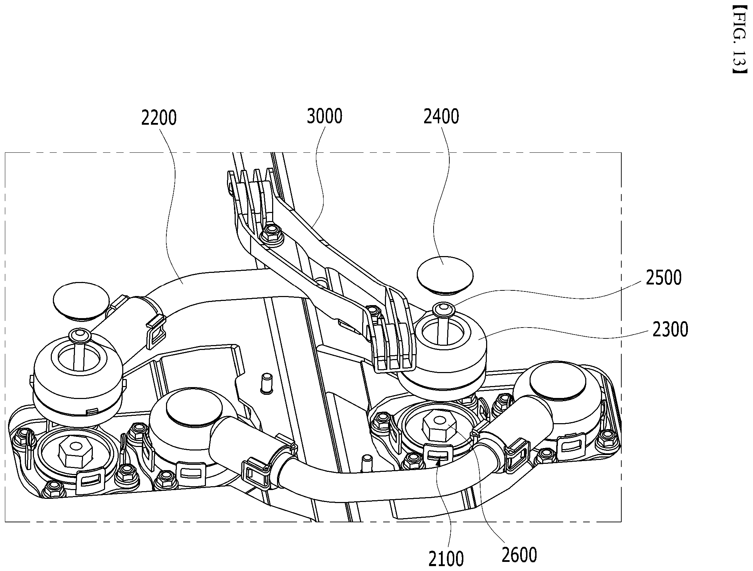

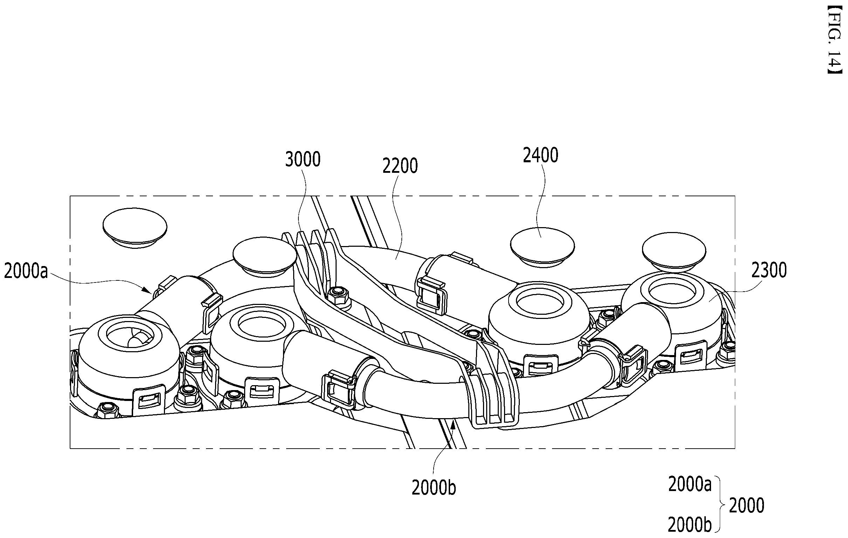

Further, referring to FIGS. 5, 13 and 14, the HV connection assembly 2000 further includes an HV connector housing 2300 coupled to the bracket 2100. Specifically, the HV connector housing 2300 covers the upper part of the bracket 2100, and the edge of the HV connector housing 2300 may be coupled with the bracket 2100. As one example, as shown in FIGS. 13 and 14, the upper part of the HV connector housing 2300 may be opened, and an upper cap 2400 that covers the upper part of the HV connector housing 2300 may be located on the upper part of the HV connector housing 2300. However, the shape of the HV connector housing 2300 is not limited thereto, and any shape that can protect the bracket 2100 from the external environment and facilitate electrical connection of the HV connection assembly 2000 can be included in the present embodiment.

Further, the HV connection assembly 2000 can connect the connection member and the HV cable 2200 in the internal space formed by coupling the bracket 2100 and the HV connector housing 2300. Here, the connecting member may include busbar bolting members 410 and 420 fastened to the terminal busbar 330 by a bolt coupling, an adapter 2600 disposed on the upper part of the busbar bolting members 410 and 420, and a pin member 2500 that connects the HV cable 2200 with the adapter 2600 and the busbar bolting members 410 and 420.

As one example, as shown in FIG. 13, in a state in which the bracket 2100 and the HV connector housing 2300 are coupled, the pin member 2500 is inserted into the opened upper part of the HV connector housing 2300, so that the pin member 2500 can connect the HV cable 2200 with the adapter 2600 and the busbar bolting members 410 and 420.

Thereby, the battery pack 1000 according to the present embodiment can electrically connect adjacent battery modules 100 to the HV connection assembly 2000 having the above-mentioned structure, thereby capable of improving the fixing force of the HV connection structure. In addition, this HV connection assembly 2000 has the advantage of being able to effectively protect the HV connection structure from the external environment and ensuring stability against shocks generated by vibration.

Further, referring to FIGS. 13 and 14, the HV connection assembly 2000 may further include a fixing member 3000 that fixes the HV connection assemblies 2000a and 2000b adjacent to each other. As one example, both ends of the fixing member may have a clip shape, and each end of the fixing member may be coupled to adjacent HV connection assemblies 2000a and 2000b. More specifically, the fixing member 3000 may be coupled to the HV cable 2200 included in the HV connection assembly 2000. However, the shape of the fixing member is not limited thereto, and any shape that can be easily coupled to adjacent HV connection assemblies 2000a and 2000b can be included in the present embodiment.

Therefore, the battery pack 1000 according to the present embodiment has the advantage that the HV connection assemblies 2000a and 2000b adjacent to each other can be fixed by the fixing member 3000, thereby ensuring stability against shocks generated by vibration depending on the external environment.

Referring to FIGS. 14 and 15, in the battery pack 1000 according to the present embodiment, sealing may be applied between the HV connection assembly 2000 and the opening portion 210. More specifically, the HV connection assembly 2000 may include a first sealing member 4100 located between the bracket 2100 and one surface of the module frame 200. As one example, as shown in FIG. 15, the first sealing member 4100 may be located between the lower part of the bracket 2100 and the opening part 211.

Further, the HV connection assembly 2000 may include a second sealing member 4200 located at a connection portion between the bracket 2100 and the HV connector housing 2300. More specifically, the second sealing member 4200 may be located between the upper part of the bracket 2100 and the inner surface of the HV connector housing 2300.

Further, the HV connection assembly 2000 may include a third sealing member 4300 located between the HV cable 2200 and the HV connector housing 2300. As one example, as shown in FIG. 15, the HV connector housing 2300 may cover one end of the HV cable 2200, and the third sealing member 4300 may be located between the HV cable 2200 and the portion of the HV connector housing 2300 that covers one end of the HV cable 2200.

As one example, the sealing members 4100, 4200 and 4300 may be members such as gaskets, but are not limited thereto. Any member that has sealing performance and heat resistance can be included in this embodiment. As another example, the sealing members 4100, 4200 and 4300 may have an O-ring shape, but are not limited thereto, and any shape that can be easily coupled between respective components can be included in the present embodiment.

Therefore, the battery pack 1000 according to the present embodiment includes at least one of a first sealing member 4100, a second sealing member 4200 and a third sealing member 4300, and thus, can improve the sealing performance between the HV connection assembly 2000 and the module frame 200 and the sealing performance of the HV connection assembly 2000 itself. In addition, as previously described in FIGS. 6 to 8, the battery module 100 according to the present embodiment have the advantage that insulating cooling liquid can flow inside the module frame 200,and the above-mentioned sealing members 4100, 4200 and 4300 can effectively prevent water leakage and liquid leakage of the insulating cooling liquid.

According to yet another embodiment of the present disclosure, the is provided a device comprising the above-mentioned battery pack. Such a device can be applied to vehicle means such as an electric bike, an electric vehicle, and a hybrid electric vehicle, but the present disclosure is not limited thereto, and also can be applied to various devices capable of using the battery module and the battery pack including the same, which falls within the scope of the present disclosure.

The invention has been described in detail above with reference to preferred embodiments thereof. However, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Reference Numerals]

100: battery module
111: battery cell
113: flow path spacer
115: insulating plate
200: module frame
210: opening part
300: busbar frame
500: end plate
1000: battery pack
1100: side surface frame
1500: electrical section
2000: HV cable assembly
2100: bracket
2130: fixing part
2150: main body
2170: extension part
2190: connection hole
2200: HV cable
2300: HV connector housing
2400: upper cap
2500: pin member
2600: adapter
3000: fixing member

## Claims

1. A battery pack comprising:
battery modules that include a battery cell stack containing a plurality of battery cells, and a module frame that houses the battery cell stack and has an opening part formed on one side; and
a plurality of HV connection assemblies that electrically connect battery modules adjacent thereto,
wherein the battery module includes a terminal busbar connected to at least one of the electrode leads of the battery cells,
wherein the HV connection assemblies and the terminal busbars included in the adjacent battery modules are respectively connected through the opening part, and
wherein sealing is applied between the HV connection assembly and the opening part.

2. The battery pack according to claim 1,
further comprising a BDU (battery disconnect unit) module that controls electrical connection between the battery modules,
wherein the HV connection assembly connects the BDU module and the terminal busbar of the battery module adjacent to the BDU module, respectively.

3. The battery pack according to claim 1, wherein:
the HV connection assembly comprises,
a HV cable for electrical connection,
a bracket disposed in the opening part, and
a connection member that passes through the bracket and connects the terminal busbar and the HV cable.

4. The battery pack according to claim 3, wherein:
further comprising a fixing member that fixes adjacent HV connection assemblies to each other,
wherein the fixing member is coupled to the HV cable included in the HV connection assembly.

5. The battery pack according to claim 3, wherein:
the HV connection assembly further comprises a first sealing member located between the bracket and one surface of the module frame.

6. The battery pack according to claim 3, wherein:
the HV connection assembly further comprises an HV connector housing coupled to the bracket, and
the connection member and the HV cable are connected in the internal space formed by coupling the bracket and the HV connector housing.

7. The battery pack according to claim 6, wherein:
the connection member comprises,
a busbar bolting member fastened to the terminal busbar through a bolt coupling,
an adapter disposed on an upper part of the busbar bolting member, and
a pin member that connects the HV cable with the adapter and the busbar bolting member.

8. The battery pack according to claim 7, wherein:
the upper part of the HV connector housing is opened, and the pin member is inserted into the upper part of the HV connector housing, and
the HV connection assembly further comprises an upper cap that covers the upper part of the HV connector housing.

9. The battery pack according to claim 6, wherein:
the HV connection assembly further comprises a second sealing member that is located at a connection portion between the bracket and the HV connector housing.

10. The battery pack according to claim 6, wherein:
the HV connection assembly further comprises a third sealing member that is located between the HV cable and the HV connector housing.

11. The battery pack according to claim 1, wherein:
the opening part is formed on the upper surface of the module frame.

12. The battery pack according to claim 1, wherein:
the terminal busbars included in the adjacent battery modules connected to the HV connection assembly have different polarities from each other.

13. The battery pack according to claim 1, wherein:
the battery module is configured to allow an insulating cooling liquid to flow in the space inside the module frame and directly cool the plurality of battery cells

14. The battery pack according to claim 13, wherein:
the battery pack comprises a busbar frame that is located respectively on the front and rear surface of the battery cell stack,
the busbar frame is formed with at least one slit through which the insulating cooling liquid flows, and
the insulating cooling liquid flows into and out of the space inside the module frame through the at least one slit.

15. A device comprising the battery pack of claim 1.
